(19) Europäisches Patentamt
European Patent Office
Office européen des brevets

(11) **EP 4 401 348 A1**

(12) # EUROPEAN PATENT APPLICATION
published in accordance with Art. 153(4) EPC

(43) Date of publication:
**17.07.2024  Bulletin 2024/29**

(21) Application number: **22863573.6**

(22) Date of filing: **01.09.2022**

(51) International Patent Classification (IPC):
***H04L 5/00*** *(2006.01)*

(52) Cooperative Patent Classification (CPC):
**H04L 5/00**

(86) International application number:
**PCT/CN2022/116477**

(87) International publication number:
**WO 2023/030438 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:  **06.09.2021   CN 202111039470**

(71) Applicant: **Vivo Mobile Communication Co., Ltd.
Dongguan, Guangdong 523863 (CN)**

(72) Inventors:
• YUAN, Pu
  **Dongguan, Guangdong 523863 (CN)**
• JIANG, Dajie
  **Dongguan, Guangdong 523863 (CN)**
• LIU, Jin
  **Dongguan, Guangdong 523863 (CN)**
• SHI, Sihao
  **Dongguan, Guangdong 523863 (CN)**

(74) Representative: **Murgitroyd & Company
165-169 Scotland Street
Glasgow G5 8PL (GB)**

(54)   **PILOT FREQUENCY SENDING AND RECEIVING METHOD AND DEVICE**

(57)   This application discloses methods for transmitting and receiving a pilot and a device. The method for transmitting a pilot includes: A transmit end determines a transmitting parameter of the pilot, where the transmitting parameter includes at least one of the following: transmitting power and a guard interval, the transmitting parameter is determined based on first parameters, and the first parameters include a delay, Doppler, and channel quality; and the transmit end transmits the pilot based on the transmitting parameter.

<u>300</u>

FIG. 3

# Description

## CROSS-REFERENCE TO RELATED APPLICATIONS

The present invention claims priority to Chinese Patent Application No. 202111039470.5, filed with the China National Intellectual Property Administration on September 06, 2021 and entitled "METHODS FOR TRANSMITTING AND RECEIVING PILOT AND DEVICE", which is incorporated herein by reference in its entirety.

## TECHNICAL FIELD

This application pertains to the field of communication technologies, and specifically relates to methods for transmitting and receiving a pilot and a device.

## BACKGROUND

Through orthogonal time frequency space (Orthogonal Time Frequency Space, OTFS) modulation, information in a data packet with a size of MxN, such as a quadrature amplitude modulation (Quadrature Amplitude Modulation, QAM) symbol, may be logically mapped to a lattice point of MxN on a two-dimensional delay-Doppler plane, that is, one QAM symbol in the data packet is modulated by using a pulse in each lattice point.

In an OTFS system, a transmitter maps a pilot to a delay-Doppler domain, and a receiver may estimate a channel response of the delay-Doppler domain by analyzing a delay-Doppler image of a pilot, to further obtain a channel response expression of a time-frequency domain. This facilitates signal analysis and processing.

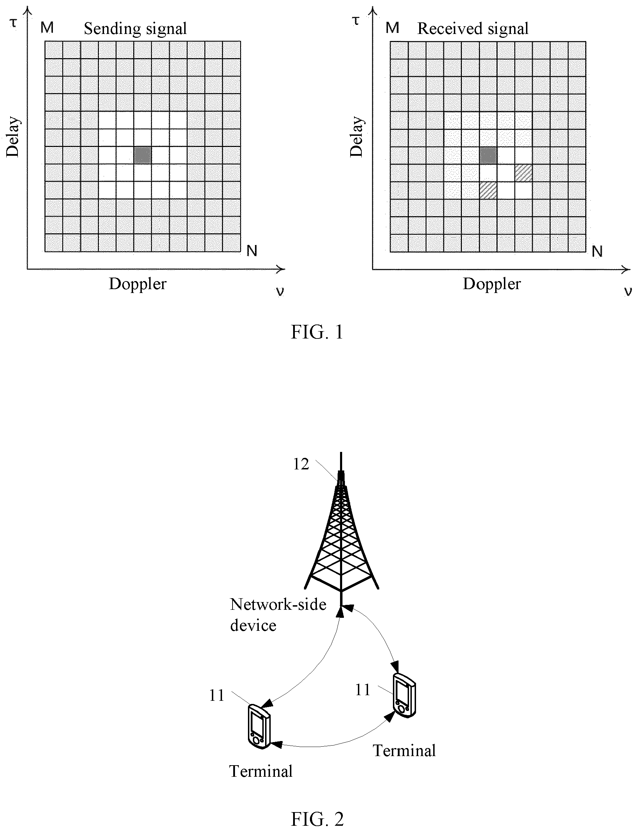

Refer to a left half part of FIG. 1. A transmitting signal includes the following three parts: a single-point pilot at a central location of the lattice point of MxN; a guard interval (with a size of $5\times5\text{-}1$) surrounding the pilot; and data around the guard interval. Refer to a right half part of FIG. 1. At a receive end, there are two shift peaks (lattice points filled with slashes in FIG. 1) in the guard interval of the lattice point in the delay-Doppler domain, which means that in addition to a primary path, a channel has two secondary paths with different delay Doppler. Amplitudes, delays, and Doppler of all the secondary paths are measured, so that a delay-Doppler domain expression of the channel is obtained. It should be noted that FIG. 1 corresponds to a single-port scenario, that is, only one group of reference signals need to be sent. When there are a plurality of antenna ports, a plurality of pilots are generally mapped to the delay-Doppler plane.

Before transmitting the pilot, a transmit end generally needs to determine a transmitting parameter of the pilot, for example, determining a guard interval of the pilot and the like. However, in the related art, determining the transmitting parameter of the pilot only based on a delay and Doppler of the channel cannot ensure detection performance of the pilot.

# SUMMARY

Embodiments of this application provides methods for transmitting and receiving a pilot and a device, to resolve a problem in the related art that determining a transmitting parameter of the pilot only based on a delay and Doppler of a channel cannot ensure detection performance of the pilot.

According to a first aspect, a method for transmitting a pilot is provided, including: A transmit end determines a transmitting parameter of the pilot, where the transmitting parameter includes at least one of the following: transmitting power and a guard interval, the transmitting parameter is determined based on first parameters, and the first parameters include a delay, Doppler, and channel quality; and the transmit end transmits the pilot based on the transmitting parameter.

According to a second aspect, a method for receiving a pilot is provided, including: a receive end receives the pilot, where the pilot is sent by a transmit end based on a transmitting parameter, the transmitting parameter includes at least one of the following: transmitting power and a guard interval, the transmitting parameter is determined based on first parameters, and the first parameters include a delay, Doppler, and channel quality.

According to a third aspect, an apparatus for transmitting a pilot is provided, including: a determination module, configured to determine a transmitting parameter of the pilot, where the transmitting parameter includes at least one of the following: transmitting power and a guard interval, the transmitting parameter is determined based on first parameters, and the first parameters include a delay, Doppler, and channel quality; and a transmitting module, configured to transmit the pilot based on the transmitting parameter.

According to a fourth aspect, an apparatus for receiving a pilot is provided, including: a receiving module, configured to receive the pilot, where the pilot is sent by a transmit end based on a transmitting parameter, the transmitting parameter includes at least one of the following: transmitting power and a guard interval, the transmitting parameter is determined based on first parameters, and the first parameters include a delay, Doppler, and channel quality.

According to a fifth aspect, a terminal is provided. The terminal includes a processor, a memory, and a program or an instruction that is stored in the memory and executable on the processor. When the program or the instruction is executed by the processor, the method according to the first aspect or the second aspect is implemented.

According to a sixth aspect, a terminal is provided, including: a processor and a communication interface. The processor is configured to determine a transmitting parameter of a pilot, where the transmitting parameter includes at least one of the following: transmitting power and a guard interval, the transmitting parameter is determined based on first parameters, and the first parameters include a delay, Doppler, and channel quality. The communication interface is configured to transmit the pilot based on the transmitting parameter; or the communication interface is configured to receive the pilot, where the pilot is sent by a transmit end based on the transmitting parameter, the transmitting parameter includes at least one of the following: the transmitting power and the guard interval, the transmitting parameter is determined based on the first parameters, and the first parameters include the delay, the Doppler, and the channel quality.

According to a seventh aspect, a network-side device is provided. The network-side device includes a processor, a memory, and a program or an instruction that is stored in the memory and executable on the processor. When the program or the instruction is executed by the processor, the method according to the first aspect or the second aspect is implemented.

According to an eighth aspect, a network-side device is provided, including a processor and a communication interface. The processor is configured to determine a transmitting parameter of a pilot, where the transmitting parameter includes at least one of the following: transmitting power and a guard interval, the transmitting parameter is determined based on first parameters, and the first parameters include a delay, Doppler, and channel quality. The communication interface is configured to transmit the pilot based on the transmitting parameter; or the communication interface is configured to receive the pilot, where the pilot is sent by a transmit end based on the transmitting parameter, the transmitting parameter includes at least one of the following: the transmitting power and the guard interval, the transmitting parameter is determined based on the first parameters, and the first parameters include the delay, the Doppler, and the channel quality.

According to a ninth aspect, a readable storage medium is provided. The readable storage medium stores a program or an instruction. When the program or the instruction is executed by a processor, the method according to the first aspect or the second aspect is implemented.

According to a tenth aspect, a chip is provided. The chip includes a processor and a communication interface. The communication interface is coupled to the processor. The processor is configured to run a program or an instruction, to implement the method according to the first aspect or the second aspect.

According to an eleventh aspect, a computer program/program product is provided. The computer program/program product is stored in a storage medium. The program/program product is executed by at least one processor to implement the method according to the first aspect or the method in the second aspect.

In embodiments of this application, a transmit end determines a transmitting parameter of a pilot. The transmitting parameter includes transmitting power and/or a guard interval. The transmitting parameter is jointly determined based on a delay, Doppler, and channel quality. In embodiments of this application, small-scale parameters (a delay and Doppler) and a large-scale parameter (channel quality) of a channel are comprehensively considered to determine the transmitting parameter of the pilot. This helps ensure detection performance of the pilot under various channel conditions and improve communication quality.

**BRIEF DESCRIPTION OF DRAWINGS**

FIG. 1 is a schematic diagram of a manner for mapping a pilot in the prior art;
FIG. 2 is a schematic diagram of a wireless communication system according to an embodiment of this application;
FIG. 3 is a schematic flowchart of a method for transmitting a pilot according to an embodiment of this application;
FIG. 4 is a schematic flowchart of a method for receiving a pilot according to an embodiment of this application.
FIG. 5 is a schematic diagram of a structure of an apparatus for transmitting a pilot according to an embodiment of this application;
FIG. 6 is a schematic diagram of a structure of an apparatus for receiving a pilot according to an embodiment of this application;
FIG. 7 is a schematic diagram of a structure of a communication device according to an embodiment of this application;
FIG. 8 is a schematic diagram of a structure of a terminal according to an embodiment of this application; and
FIG. 9 is a schematic diagram of a structure of a network-side device according to an embodiment of this application.

**DESCRIPTION OF EMBODIMENTS**

The following clearly describes technical solutions in embodiments of this application with reference to the accompanying drawings in embodiments of this application. It is clear that the described embodiments are some but not all of the embodiments of this application. All other embodiments obtained by a person of ordinary skill in the art based on the embodiments of this application shall fall within the protection scope of this application.

Terms "first", "second", and the like in the specification and claims of this application are used to distinguish between similar objects but do not describe a specific order or sequence. It should be understood that the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that technologies described in the embodiments of this application are not limited to a long term evolution (Long Term Evolution, LTE)/LTE-advanced (LTE-Advanced, LTE-A) system, and may further be used in other wireless communications systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and another system. The terms "system" and "network" in the embodiments of this application may be used interchangeably. The described technologies may be applied to both the systems and the radio technologies mentioned above as well as to other systems and radio technologies. The following descriptions describe a new radio (New Radio, NR) system for example purposes, and NR terms are used in most of the following descriptions. These technologies may also be applied to an application other than an NR system application, for example, a 6th generation (6th Generation, 6G) communication system.

FIG. 2 is a schematic diagram of a wireless communication system to which an embodiment of this application can be applied. The wireless communication system includes a terminal 11 and a network-side device 12. The terminal 11 may also be referred to as a terminal device or user equipment (User Equipment, UE). The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), or a smart household (a household device with a wireless communication function, such as a refrigerator, a television, a washing machine, or furniture). The wearable device includes: a smart watch, a smart band, a smart headset, smart glasses, smart jewelry (a smart bracelet, a smart chain bracelet, a smart ring, a smart necklace, a smart anklet, a smart ankle chain, or the like), a smart wrist strap, smart clothes, a game console, and the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a next-generation NodeB (gNB), a home NodeB, a home evolved NodeB, a WLAN access point, a Wi-Fi node, a transmission and reception point (Transmission and Reception Point, TRP), or another appropriate term in the art. Provided that a same technical effect is achieved, the base station is not limited to a specified technical term. It should be noted that, in the embodiments of this application, only a base station in an NR system is used as an example, but a specific type of the base station is not limited.

With reference to the accompanying drawings, methods for transmitting and receiving a pilot and a device provided in the embodiments of this application are described in detail by using some embodiments and application scenarios thereof.

The embodiments of this application may follow a general principle of power enhancement of the pilot. That is, remaining power on a blank resource element (that is, a guard interval) is used for power enhancement of the pilot. Therefore, when a transmit end needs to enhance power of the pilot, a quantity of blank resource elements may be increased (that is, the guard interval of the pilot is increased) to obtain more remaining power for use on the pilot; or power is borrowed from a data area to enhance the power of the pilot.

In the related art, determination of the guard interval is only related to two small-scale parameters, that is, a delay and Doppler, of a channel. In addition, channel quality (for example, in a specific time length, an average signal-to-noise ratio SNR among several radio frames) of a received signal is further affected by a large-scale parameter. Therefore, determining the guard interval only based on the delay and the Doppler cannot ensure that detection performance of the pilot is optimal.

In the embodiments of this application, the small-scale parameters and the large-scale parameter of the channel are comprehensively considered to determine a transmitting parameter of the pilot. The transmitting parameter, for example, may include transmitting power and the guard interval, so as to ensure detection performance of the pilot under various channel conditions.

In addition, considering that change speeds of the large-scale parameter and the small-scale parameters of the channel are different, for example, generally assuming that the delay and the Doppler are changed at a scale of each subframe/slot, and the average SNR may be changed at a scale of dozens of subframes/slots, a tiered/layered manner for adjusting the guard interval of the pilot is further designed in the embodiments of this application to adjust a period of corresponding signaling according to a change rule of parameters, so as to reduce feedback costs as much as possible.

It should be noted that the pilot/slot in the embodiments of this application may be a same concept, and represents a minimum time-frequency resource unit of a transport block (Transport Block, TB) that carries a complete encoded signal.

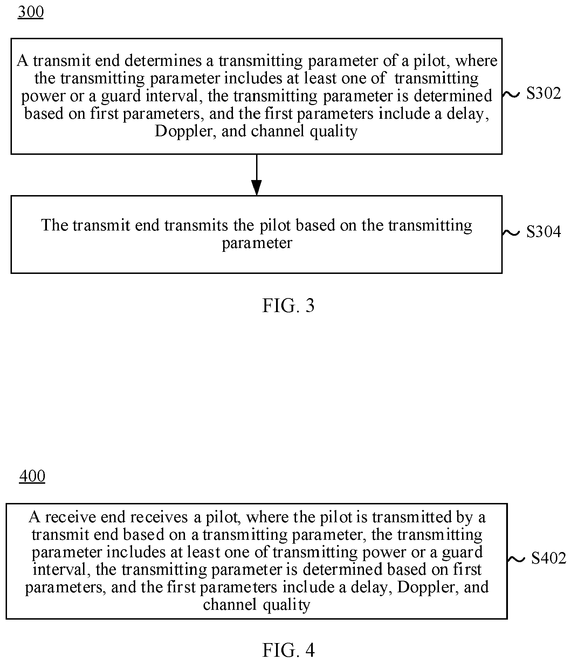

As shown in FIG. 3, an embodiment of this application provides a method 300 for transmitting a pilot. The method may be performed by a transmit end. In other words, the method may be performed by software or hardware installed in the transmit end. The transmit end may be a terminal or a network-side device. The method includes the following steps.

S302: The transmit end determines a transmitting parameter of the pilot, where the transmitting parameter includes at least one of the following: transmitting power and a guard interval, the transmitting parameter is determined based on first parameters, and the first parameters include a delay (delay, or referred to as a latency), Doppler, and channel quality.

The parameters, for example, the transmitting parameter and the first parameters, mentioned in embodiments of this application may include specific parameter values.

The channel quality may be a signal-to-noise ratio (Signal-to-Noise Ratio, SNR), a signal to interference and noise ratio (Signal to Interference and Noise Ratio, SINR), a channel quality indicator (Channel Quality Indicator, CQI), or the like, or the channel quality may be obtained by using a bit error rate. Subsequent embodiments use the signal-to-noise ratio as an example to describe the channel quality, and another parameter may also be implemented in a similar manner.

In this embodiment, the transmit end may be a network-side device, and a receive end may be a terminal; or the transmit end may be a terminal, and the receive end may be a network-side device or another terminal.

In this embodiment, the transmit end may determine the transmitting parameter of the pilot based on indication information from the receive end. The indication information may directly indicate the transmitting parameter of the pilot, or the indication information indicates a parameter related to the transmitting parameter of the pilot. The transmit end determines the transmitting parameter of the pilot based on the related parameter.

In this embodiment, for example, that the transmit end determines a transmitting parameter of the pilot includes: the transmit end determines the guard interval of the pilot; or the transmit end determines the transmitting power of the pilot, and determines the guard interval of the pilot based on the determined transmitting power; or the transmit end determines the transmitting power of the pilot.

S304: The transmit end transmits the pilot based on the transmitting parameter.

In this embodiment, after determining the transmitting parameter of the pilot, the transmit end may map the pilot to a delay-Doppler domain to transmit the pilot to the receive end.

In this embodiment, after the transmit end determines the transmitting parameter of the pilot, the transmit end may further indicate the transmitting parameter of the pilot to the receive end, so that the receive end demodulates data. For example, when the transmit end is the network-side device, and the receive end is the terminal, the network-side device may indicate a determined transmitting parameter to the terminal by using downlink control information (Downlink Control Information, DCI) or radio resource control (Radio Resource Control, RRC) signaling, so that the terminal demodulates the data.

In the method for transmitting a pilot provided in this embodiment of this application, the transmit end determines the transmitting parameter of the pilot. The transmitting parameter includes the transmitting power and/or the guard interval. The transmitting parameter is jointly determined based on the delay, the Doppler, and the channel quality. In this embodiment of this application, small-scale parameters (a delay and Doppler) and a large-scale parameter (channel quality) of a channel are comprehensively considered to determine the transmitting parameter of the pilot. This helps ensure detection performance of the pilot under various channel conditions and improve communication quality.

Optionally, the first parameters include the channel quality. That the transmit end determines a transmitting parameter of the pilot includes: The transmit end performs, based on the indication information, at least one of the following: increasing the transmitting power of the pilot, and increasing the guard interval of the pilot. The indication information is sent by the receive end when measured channel quality is greater than a first threshold; or the indication information is sent by the receive end when a measured second parameter is greater than or equal to a second threshold, where the second parameter is related to the channel quality. The second parameter may be the bit error rate, and the second threshold may be a threshold related to the bit error rate.

In this embodiment, the indication information may include a power amplification multiple of the pilot. In this way, the transmit end may determine the transmitting parameter of the pilot based on the power amplification multiple. For example, the transmit end increases the transmitting power of the pilot based on the power amplification multiple. For another example, the transmit end increases the guard interval of the pilot based on the power amplification multiple.

When the transmitting power of the pilot is coupled to the guard interval of the pilot, the transmit end may increase the transmitting power of the pilot by increasing the guard interval of the pilot, or may increase the transmitting power of the pilot by reducing transmitting power of the data. This process may be referred to as a process in which the pilot borrows power from the data. An increased value of the transmitting power of the pilot is equal to a reduced value of the transmitting power of the data, and the data and the pilot are mapped to a same delay-Doppler domain.

Optionally, the first threshold is determined based on the following formula:

$$\zeta_l = \frac{(K\text{-}1)E\left(\sum_{l=0}^{L\text{-}1}|h_l|^2\right)}{cE(|h_l|^2)},$$

where

$\zeta_1$ represents the first threshold;
K represents a constant related to a detection threshold of the pilot, and is generally used in the receive end;
E( ) represents a mathematical expectation, and may be approximately determined by using an average value;
L represents a quantity of delay paths;
1 represents an index of a delay path;
$h_l$ represents a channel gain of a *l*-th delay path; and
c represents a transmitting power multiple of the pilot.

In an example, the first threshold may be determined by the receive end based on the foregoing formula.

In the foregoing embodiments, that the transmit end determines a transmitting parameter of the pilot may include: The transmit end determines the transmitting parameter of the pilot based on a first transmitting period. A length of the first transmitting period is greater than a length of a second transmitting period. The second transmitting period is a period for determining the transmitting parameter of the pilot. For example, the second transmitting period is the period in which the transmit end determines the transmitting parameter of the pilot based on the delay and the Doppler. This embodiment may reduce overheads of feedback signaling as much as possible.

The foregoing embodiments mainly describe how to determine the transmitting parameter of the pilot based on the channel quality (such as the signal-to-noise ratio). The following describes how to determine the transmitting parameter of the pilot based on the delay and the Doppler by using several embodiments. The several embodiments described below may be freely combined with the foregoing embodiments.

Optionally, the first parameters include the delay and the Doppler. Before the transmit end determines the transmitting parameter of the pilot, the method further includes the following steps.

(1) The transmit end transmits a first pilot, and this process may be an initialization process.
(2) The transmit end receives a maximum delay and maximum Doppler, where the maximum delay and the maximum Doppler are determined by the receive end based on the first pilot.
(3) The transmit end determines a transmitting parameter of a second pilot based on the maximum delay and the maximum Doppler.
(4) The transmit end transmits the second pilot based on the transmitting parameter of the second pilot.
(5) The transmit end receives the delay and the Doppler, where the delay and the Doppler are determined by the receive end based on the second pilot; or the transmit end receives the guard interval of the pilot, where the guard interval is determined by the receive end based on the second pilot.

When the transmit end receives the delay and the Doppler in the foregoing step (5), in S202, the transmit end may determine the transmitting parameter of the pilot based on the delay and the Doppler; or when the transmit end receives the guard interval of the pilot in the foregoing step (5), in S202, the transmit end may directly use the received guard interval as the guard interval of the pilot for transmitting.

In this embodiment, that the transmit end determines a transmitting parameter of the pilot includes: The transmit end determines the transmitting parameter of the pilot based on the second transmitting period. The length of the second transmitting period is greater than duration T. The duration T may be a length of one slot/subframe, so as to reduce the overheads of the feedback signaling as much as possible.

In this embodiment, the transmit end determines the transmitting parameter of the pilot based on the second transmitting period. Certainly, if the transmit end receives a third parameter in the second transmitting period, the transmit end determines the transmitting parameter of the pilot based on the third parameter. The third parameter is sent by the receive end when the second parameter is greater than or equal to the second threshold. The third parameter may be the guard interval. The second parameter is related to the channel quality. The second parameter may be the bit error rate, and the second threshold may be the threshold related to the bit error rate.

This embodiment may break through the original second transmitting period. For example, in a feedback period (the second transmitting period), if a bit error rate ε of a subframe k or bit error rates of consecutive g subframes starting from k meet ε≥ε_threshold, the receive end immediately feeds back a new guard interval and indicates the guard interval to the transmit end, so that the transmit end adjusts the guard interval of the pilot in real time. A start location of periodic feedback is recalculated from a subframe obtained through adjustment, that is, from a (k+1)-th subframe or a (k+g+1)-th subframe.

Optionally, in the foregoing embodiments, that the transmit end determines a transmitting parameter of the pilot includes: The transmit end increases the transmitting power of the pilot; or the transmit end reduces the transmitting power of the pilot.

In an example, when the transmit end increases the transmitting power of the pilot, the increased value of the transmitting power of the pilot is equal to the reduced value of the transmitting power of the data, and the data and the pilot are mapped to the same delay-Doppler domain, that is, the pilot borrows power from the data.

The example may further include the following step: The transmit end indicates the transmitting power of the data to the receive end, so that the receive end demodulates the data.

Optionally, that the transmit end determines a transmitting parameter of the pilot includes: The transmit end determines the transmitting power of the pilot based on a power scaling coefficient, where the power scaling coefficient is selected by the receive end from a plurality of default power scaling coefficients, to reduce feedback overheads.

In an example, that the transmit end determines the transmitting power of the pilot based on a power scaling coefficient includes: When the power scaling coefficient is greater than 1, the transmit end increases the transmitting power of the pilot based on one of the following:

    (1) increasing the guard interval of the pilot, where the transmitting power of the pilot is coupled to the guard interval of the pilot; and
    (2) reducing the transmitting power of the data, where the data and the pilot are mapped to the same delay-Doppler domain.

In another example, that the transmit end determines the transmitting power of the pilot based on a power scaling coefficient includes: When the power scaling coefficient is less than 1, the transmit end reduces the transmitting power of the pilot.

The example may further include the following step: The transmit end increases the transmitting power of the data. A reduced value of the transmitting power of the pilot is equal to an increased value of the transmitting power of the data, and the data and the pilot are mapped to the same delay-Doppler domain.

The method for transmitting a pilot according to this embodiment of this application is described in detail above with reference to FIG. 3. A method for receiving a pilot according to another embodiment of this application is described in detail below with reference to FIG. 4. It may be understood that interaction between a receive end and a transmit end described from the perspective of the receive end is the same as that described on a transmit end side in the method shown in FIG. 3. To avoid repetition, related descriptions are appropriately omitted.

FIG. 4 is a schematic flowchart for implementing a method for receiving a pilot according to an embodiment of this application. The method may be applied to a receive end. As shown in FIG. 4, a method 400 includes the following steps.

S402: The receive end receives the pilot, where the pilot is sent by a transmit end based on a transmitting parameter, the transmitting parameter includes at least one of the following: transmitting power and a guard interval, the transmitting parameter is determined based on first parameters, and the first parameters include a delay, Doppler, and channel quality.

In this embodiment of this application. The receive end receives the pilot. The pilot is sent by the transmit end based on the transmitting parameter. The transmitting parameter includes the transmitting power and/or the guard interval. The transmitting parameter is jointly determined based on the delay, the Doppler, and the channel quality. In this embodiment of this application, small-scale parameters (a delay and Doppler) and a large-scale parameter (channel quality) of a channel are comprehensively considered to determine the transmitting parameter of the pilot. This helps ensure detection performance of the pilot under various channel conditions and improve communication quality.

Optionally, in an embodiment, the first parameters include the channel quality. Before the receive end receives the pilot, the method further includes: The receive end transmits indication information when measured channel quality is greater than a first threshold; or the receive end transmits indication information when a measured second parameter is greater than or equal to a second threshold, where the second parameter is related to the channel quality. The indication information is used by the transmit end to perform at least one of the following: increasing the transmitting power of the pilot, and increasing the guard interval of the pilot.

Optionally, in an embodiment, the indication information includes a power amplification multiple of the pilot.

Optionally, in an embodiment, the method further includes: The receive end determines the first threshold based on the following formula:

$$\zeta_l = \frac{(K-1)E\left(\sum_{l=0}^{L-1}|h_l|^2\right)}{cE(|h_l|^2)},$$

where

    $\zeta_1$ represents the first threshold;
    K represents a constant related to a detection threshold of the pilot;
    E( ) represents a mathematical expectation;
    L represents a quantity of delay paths;
    1 represents an index of a delay path;
    $h_l$ represents a channel gain of a 1-th delay path; and
    c represents a transmitting power multiple of the pilot.

Optionally, in an embodiment, the transmit end is configured to determine the transmitting parameter of the pilot based on a first transmitting period. A length of the first transmitting period is greater than a length of a second transmitting period. The second transmitting period is a period in which the transmit end determines the transmitting parameter of the pilot based on the delay and the Doppler.

Optionally, in an embodiment, the first parameters include the delay and the Doppler. Before the receive end receives the pilot, the method further includes: The receive end receives a first pilot. The receive end transmits a maximum delay and maximum Doppler. The maximum delay and the maximum Doppler are determined by the receive end based on the first pilot, and the maximum delay and the maximum Doppler are used by the transmit end to determine a transmitting parameter of a second pilot. The receive end receives the second pilot, where the second pilot is sent by the transmit end based on the transmitting parameter of the second pilot. The receive end transmits the delay and the Doppler, where the delay and the Doppler are determined by the receive end based on the second pilot; or the receive end transmits the guard interval of the pilot, where the guard interval is determined by the receive end based on the second pilot.

Optionally, in an embodiment, the transmit end is configured to determine the transmitting parameter of the pilot based on the second transmitting period. The length of the second transmitting period is greater than duration T.

Optionally, in an embodiment, the method further includes: The receive end transmits a third parameter when the second parameter is greater than or equal to the second threshold. The second parameter is related to the channel quality. If the transmit end receives the third parameter in the second transmitting period, the transmit end is further configured to determine the transmitting parameter of the pilot based on the third parameter.

Optionally, in an embodiment, the transmit end is configured to increase the transmitting power of the pilot, or reduce the transmitting power of the pilot.

Optionally, in an embodiment, when the transmit end increases the transmitting power of the pilot, an increased value of the transmitting power of the pilot is equal to a reduced value of transmitting power of data, and the data and the pilot are mapped to a same delay-Doppler domain.

Optionally, in an embodiment, the method further includes: The receive end receives the transmitting power of the data. The receive end demodulates the data based on the transmitting power of the data.

Optionally, in an embodiment, the method further includes: The receive end selects a power scaling coefficient from a plurality of default power scaling coefficients, where the power scaling coefficient is used by the transmit end to determine the transmitting power of the pilot.

To describe in detail the methods for transmitting and receiving a pilot provided in the embodiments of this application, the following uses several specific embodiments for description.

**Embodiment 1**

Embodiment 1 provides a process in which a transmit end performs, based on feedback of a receive end, two tiers of dynamic adjustment on a pilot transmitting mode. This embodiment may be performed in two tiers, that is a first tier (Tier 1) and a second tier (Tier 2).

Tier 1:

When determining a guard interval of the pilot, the transmit end may obtain prior information of channel state information (Channel State Information, CSI).

To ensure accuracy of initial CSI estimation, the transmit end may transmit an initial pilot subframe (corresponding to the first pilot in the foregoing embodiments). It is assumed that a number is 0. An initial pilot frame has a small quantity of sampling points (that is, MN is small, where the MN may be a size of a lattice point of a delay-Doppler domain) to reduce overheads, and a data part is not included, so that a sufficient guard interval is ensured to roughly estimate a maximum delay $\tau_{max}$ and maximum Doppler $v_{max}$ of a channel.

A set of the maximum delay and maximum Doppler estimated by the receive end by using the initial pilot frame is denoted as ( $\tau_m^0, v_m^0$ ), and is fed back to the transmit end. The transmit end determines a guard interval of a pilot of a next frame based on this set ( $\tau_m^0, v_m^0$ ).

The transmit end transmits the pilot (corresponding to the second pilot in the foregoing embodiments) in a next subframe, that is, a frame with a number of 1. The guard interval of the pilot may be determined by ( $\tau_m^0, v_m^0$ ). After receiving the subframe 1, the receive end obtains a delay and Doppler ( $\tau_m^1, v_m^1$ ) through measurement, and feeds back measured ( $\tau_m^1, v_m^1$ ) to the transmit end.

In a specific example, it is assumed that an area $S(\tau, v)$ of the guard interval is determined based on the following formula:

$$S(\tau, v) = (2l_\tau + 1)(4k_v + 1) - 1$$

$$l_\tau = \lceil \tau M \Delta f \rceil, \ k_v = \lceil v N \Delta T \rceil$$

, and $\lceil a \rceil$ represents rounding up a. A width that is of the guard interval of the pilot and that is quantized by the subframe 1 based on resolution of a delay-Doppler resource block is ( $l_\tau^0, k_v^0$ ). The receive end calculates an updated width ( $l_\tau^1, k_v^1$ ) of the guard interval of the pilot by using a pilot measurement result of the subframe 1, and directly feeds back ( $l_\tau^1, k_v^1$ ) or ( $l_\tau^1 - l_\tau^0, k_v^1 - k_v^0$ ) instead of ( $\tau_m^1, v_m^1$ ). Because the former is an integer, and the latter is a floating point number, a part of feedback overheads may be reduced.

In addition, to further reduce the feedback overheads, the transmit end does not need to perform subframe-level feedback and update of ($l_\tau, k_v$), and may perform feedback based on a first period $T_1$ (corresponding to the second transmitting period in the foregoing embodiments).

Further, when periodic feedback is performed, a channel between two times of feedback can be significantly changed (for example, another reflector is added between the receive end and the transmit end), and consequently, an existing guard interval of the pilot cannot ensure accurate channel estimation. A bit error rate $\varepsilon$ may further be introduced as a basis for determining whether it is required to break the period to perform feedback in real time.

For example, in a feedback period, if a bit error rate of a subframe k or bit error rates of consecutive g subframes starting from k meet $\varepsilon \geq \varepsilon_{threshold}$, where $\varepsilon_{threshold}$ represents a threshold of the bit error rate, the receive end immediately performs feedback, so that the transmit end adjusts the guard interval of the pilot in real time. A start location of periodic feedback is recalculated from a subframe obtained through adjustment, that is, from a (k+1)-th subframe or a (k+g+1)-th subframe.

Tier 2:

A behavior of adjusting the pilot transmitting mode based on small-scale parameters in this embodiment of this application is described above. On this basis, because a change of a large-scale parameter of a channel causes a change of an average SNR, to take an impact of an SNR on accuracy of the channel estimation into account, $T_2$ may further be used as a second period to adjust the pilot transmitting mode based on the SNR.

Specifically, the receive end uses sampling points of a received signal of the current second period to estimate an average SNR of the received signal, and the average SNR is denoted as $\rho$, where

$$\rho \cong \frac{E\left(\sum_{l=0}^{L-1} |h_l|^2 p_0\right)}{\sigma^2}$$

Sum power of the received pilot signal and noise for a delay path $l$, and a detection threshold $K\sigma^2$ roughly meet the following relationship:

$$E\left(|h_l|^2 cp_0\right) + \sigma^2 \geq K\sigma^2$$

Therefore, it may be deduced that:

$$\rho \geq \frac{(K-1)E\left(\sum_{l=0}^{L-1} |h_l|^2\right)}{cE(|h_l|^2)}$$

For the right side of the inequality, c and K are known constants, and L and corresponding $h_l$ are given based on a channel estimation result of the pilot. For different 1, a necessary and sufficient condition for an average SNR of a current received signal in

$$\zeta_l = \frac{(K-1)E\left(\sum_{l=0}^{L-1} |h_l|^2\right)}{cE(|h_l|^2)}$$ to meet a requirement is that, for currently detected L paths, $\forall l \in (0, L-1)$, and the paths all meet $\zeta_l \leq \rho$.

This is used as a determination basis, in a final subframe of each second period (corresponding to the first transmitting period in the foregoing embodiments), when $\zeta_1 \leq \rho$, a current pilot transmitting mode does not need to be adjusted; and when $\zeta_1 > \rho$, the pilot transmitting mode needs to be adjusted to reduce $\zeta_1$.

Specifically, this may be achieved by increasing a transmitting power multiple c of the pilot, for example, by increasing the guard interval of the pilot. Actually, the receive end may calculate a new value $c_{new}$ by directly quantizing the foregoing relationship, and indicate the new value to the transmit end:

$$c_{new} = \left\lceil \frac{(K-1)E\left(\sum_{l=0}^{L-1} |h_l|^2\right)}{\rho E(|h_l|^2)} \right\rceil$$

After receiving $c_{new}$, the transmit end may correspondingly adjust a set of values ($l_\tau, k_v$) of the guard interval of the pilot, to meet that a range of the values is greater than $c_{new}$.

Specifically, in this embodiment, each time the guard interval ($l_\tau, k_v$) of the pilot is determined, the guard interval needs to be indicated to the receive end by the transmit end in DCI or RRC signaling.

## Embodiment 2

An architecture of Embodiment 2 is similar to that of Embodiment 1. A similarity lies in that an architecture having two tiers is still used. A difference lies in that, in a pilot transmitting mode in Embodiment 2, transmitting power of a pilot and a guard interval of the pilot are decoupled, that is, a transmitting power multiple of the pilot meets $c \neq (2l_\tau + 1)(4k_v + 1)$, where $(2l_\tau + 1)(4k_v + 1)$

represents a size of the guard interval of the pilot. Therefore, in this embodiment, the guard interval of the pilot is estimated and determined by using small-scale parameters of Tier 1, and the transmitting power of the pilot is estimated and determined by using a large-scale parameter of Tier 2. This embodiment may be performed in two tiers, that is a first tier (Tier 1) and a second tier (Tier 2).

Tier 1:

For Tier 1, refer to Embodiment 1. To avoid repetition, the description of Tier 1 is omitted.

Tier 2:

Each time the guard interval $(l_\tau, k_v)$ of the pilot and the transmitting power multiple c of the pilot are determined, the guard interval and the transmitting power multiple may be indicated to a receive end by a transmit end in DCI or RRC signaling.

Because a change of a large-scale parameter of a channel causes a change of an average SNR, to take an impact of an SNR on accuracy of channel estimation into account, $T_2$ further needs to be used as a second period to adjust the transmitting power of the pilot based on the SNR. Specifically, the receive end uses sampling points of a received signal of a current period to estimate the average SNR of the received signal by using the prior art, and the average SNR is denoted as $\rho$, where

$$\rho \cong \frac{E\left(\sum_{l=0}^{L-1}|h_l|^2 p_0\right)}{\sigma^2}$$

Sum power of the received pilot signal and noise for a delay path *l*, and a detection threshold $K\sigma^2$ roughly meet the following relationship:

$$E\left(|h_l|^2 cp_0\right) + \sigma^2 \geq K\sigma^2$$

Therefore, it may be deduced that:

$$\rho \geq \frac{(K-1)E\left(\sum_{l=0}^{L-1}|h_l|^2\right)}{cE(|h_l|^2)}$$

For the right side of the inequality, K is a known constant, and L and corresponding $h_l$ are given based on a channel estimation result of the pilot. In addition, c indicated by the transmit end is used, so that a specific value may be calculated. For different 1, a necessary and sufficient condition for an average SNR of a current received signal in

$$\frac{(K-1)E\left(\sum_{l=0}^{L-1}|h_l|^2\right)}{cE(|h_l|^2)} = \zeta_l$$

to meet a require-

ment is that, for currently detected L paths, $\forall l \in (0, L-1)$, and the paths all meet $\zeta_l \leq \rho$.

This is used as a determination basis, in a final subframe of each second period (corresponding to the first transmitting period in the foregoing embodiments), when $\zeta_l \leq \rho$, a current pilot transmitting mode does not need to be adjusted; and when $\zeta_l > \rho$, the pilot transmitting mode needs to be adjusted to reduce $\zeta_l$. Specifically, this is achieved by increasing the transmitting power multiple c of the pilot and by increasing the guard interval of the pilot based on the increased transmitting power multiple of the pilot. Actually, the receive end may calculate a new value $c_{new}$ by directly quantizing the foregoing relationship, and indicate the new value to the transmit end, where

$$c_{new} = \left\lceil \frac{(K-1)E\left(\sum_{l=0}^{L-1}|h_l|^2\right)}{\rho E(|h_l|^2)} \right\rceil.$$

After receiving $c_{new}$, the transmit end may correspondingly adjust the transmitting power of the pilot to $c'p_0$, $c' \geq c_{new}$.

**Embodiment 3**

An architecture of Embodiment 3 is similar to that of Embodiment 2. A difference lies in that, in the pilot transmitting mode in Embodiment 2, the receive end may indicate the guard interval $(l_\tau, k_v)$ of the pilot and the transmitting power multiple c of the pilot, but in Embodiment 3, the receive end may only indicate the guard interval $(l_\tau, k_v)$ of the pilot, and does not need to indicate the transmitting power multiple c of the pilot.

This embodiment may be performed in two tiers, that is a first tier (Tier 1) and a second tier (Tier 2).

Tier 1:

For Tier 1, refer to Embodiment 1. To avoid repetition, the description of Tier 1 is omitted.

Tier 2:

Because a change of a large-scale parameter of a channel causes a change of an average SNR, to take an impact of an SNR on accuracy of channel estimation into account, $T_2$ further needs to be used as a second period (corresponding to the first transmitting period in the foregoing embodiments) to adjust the transmitting power of the pilot based on the SNR. Similar to analysis in the foregoing embodiments:

$$\rho \geq \frac{(K-1)E\left(\sum_{l=0}^{L-1}|h_l|^2\right)}{cE(|h_l|^2)}$$

Because c is unknown, whether a condition for the inequality to hold is met cannot be determined. Therefore, qualitative determination can only be performed by using another parameter such as a bit error rate $\varepsilon$ That is, when $\varepsilon \geq \varepsilon_{threshold}$, the receive end is triggered to transmit an instruction for adjusting power of the pilot.

When receiving the instruction for adjusting the power of the pilot, the transmit end adjusts c based on a step length preset according to a protocol.

## Embodiment 4

In Embodiment 4, a process for dynamically adjusting a pilot transmitting mode is simplified. Compared with Embodiment 1, Embodiment 4 is performed in one tier instead of two tiers.

When determining a guard interval of a pilot, a transmit end may obtain prior information of CSI.

To ensure accuracy of initial CSI estimation, the transmit end may transmit an initial pilot subframe (corresponding to the first pilot in the foregoing embodiments). It is assumed that a number is 0. An initial pilot frame has a small quantity of sampling points (that is, MN is small) to reduce overheads, and a data part is not included, so that a sufficient guard interval is ensured to roughly estimate a maximum delay $\tau_{max}$ and maximum Doppler $v_{max}$ of a channel.

A set of the maximum delay and maximum Doppler estimated by a receive end by using the initial pilot frame is denoted as ( $\tau_m^0, v_m^0$ ), and is fed back to the transmit end. The transmit end determines a guard interval of a pilot of a next frame based on this set ( $\tau_m^0, v_m^0$ ).

The transmit end transmits the pilot (corresponding to the second pilot in the foregoing embodiments) in a next subframe, that is, a frame with a number of 1. The guard interval of the pilot may be determined by ( $\tau_m^0, v_m^0$ ). After receiving the subframe 1, the receive end obtains ( $\tau_m^1, v_m^1$ ) through measurement, and feeds back measured ( $\tau_m^1, v_m^1$ ) to the transmit end.

In a specific example, it is assumed that an area $S(\tau, v)$ of the guard interval is determined based on the following formula:

$$S(\tau, v) = (2l_\tau + 1)(4k_v + 1) - 1$$

$$l_\tau = \lceil \tau M \Delta f \rceil, \ k_v = \lceil v N \Delta T \rceil$$ and $\lceil a \rceil$ represents rounding up a. A width that is of the guard interval of the pilot and that is quantized by the subframe 1 based on resolution of a delay-Doppler resource block is ( $l_\tau^0, k_v^0$ ). The receive

end calculates an updated width ( $l_\tau^1, k_v^1$ ) of the guard interval of the pilot by using a pilot measurement result of the subframe 1, and directly feeds back ( $l_\tau^1, k_v^1$ ) or ( $l_\tau^1 - l_\tau^0, k_v^1 - k_v^0$ ) instead of ( $\tau_m^1, v_m^1$ ). Because the former is an integer, and the latter is a floating point number, a part of feedback overheads may be reduced.

In addition, to further reduce the feedback overheads, the transmit end does not need to perform subframe-level feedback and update of ( $l_\tau, k_v$ ), and may perform feedback based on a first period $T_1$ (corresponding to the second transmitting period in the foregoing embodiments).

In the first period, the method in Tier 2 in the foregoing embodiments and ( $\tau_m^1, v_m^1$ ) or ( $l_\tau^1, k_v^1$ ) determined by using small-scale parameters are used to determine whether the following formula is met.

$$\rho \geq \frac{(K-1)E\left(\sum_{l=0}^{L-1}|h_l|^2\right)}{cE(|h_l|^2)}$$

$$c = \left(2l_\tau^1 + 1\right)\left(4k_v^1 + 1\right)$$ . If the condition is met, ( $l_\tau^1, k_v^1$ ) is fed back. If the condition is not met, $c_{new}$ is calculated and sent to the transmit end, where

$$c_{new} = \left\lceil \frac{(K-1)E\left(\sum_{l=0}^{L-1}|h_l|^2\right)}{\rho E(|h_l|^2)} \right\rceil$$

## Embodiment 5

This embodiment may be a supplementary solution, and may be combined with any one of the foregoing four embodiments.

First, for increasing power of a pilot, in addition to borrowing power from a guard interval, power may further be borrowed from data that is mapped to a same delay-Doppler domain. In this case, a procedure may be: A network-side device determines the guard interval based on channel characteristics ($\tau_{max}$ and $v_{max}$) obtained by a terminal through estimation, and remains the guard interval unchanged. If the power borrowed from the guard interval still does not meet a requirement on the power of the pilot, the power is borrowed from a data area. In this case, a magnitude (an absolute value or a relative value) of the power of the data area needs to be notified to a receive end to assist in demodulating the data.

Second, in addition to feeding back a size of a target guard interval obtained based on the channel characteristics, the receive end further feeds back one power

scaling coefficient:

$$f = \frac{c_{new}}{c}$$

To reduce feedback overheads, a value of f may be {0.8, 1, 1.2, 1.4} or {1, 1.5, 2, 4}. After receiving the feedback of the receive end, the network-side device may select to remain the guard interval reported by the receive end unchanged, and borrow the power from the data (f>1); or the network-side device may increase the guard interval, and does not borrow the power from the data (f>1); or the network-side device may relatively increase the power of the data (f<1). In all the manners, a new guard interval or a magnitude of the power borrowed from the data may both be notified to the receive end.

It should be noted that, the methods for transmitting and receiving a pilot provided in the embodiments of this application may be performed by apparatuses for transmitting and receiving a pilot or by control modules that are in the apparatuses for transmitting and receiving a pilot and that are configured to perform the methods for transmitting and receiving a pilot. In an embodiment of this application, an example in which the apparatuses for transmitting and receiving a pilot perform the methods for transmitting and receiving a pilot is used to describe the apparatuses for transmitting and receiving a pilot provided in this embodiment of this application.

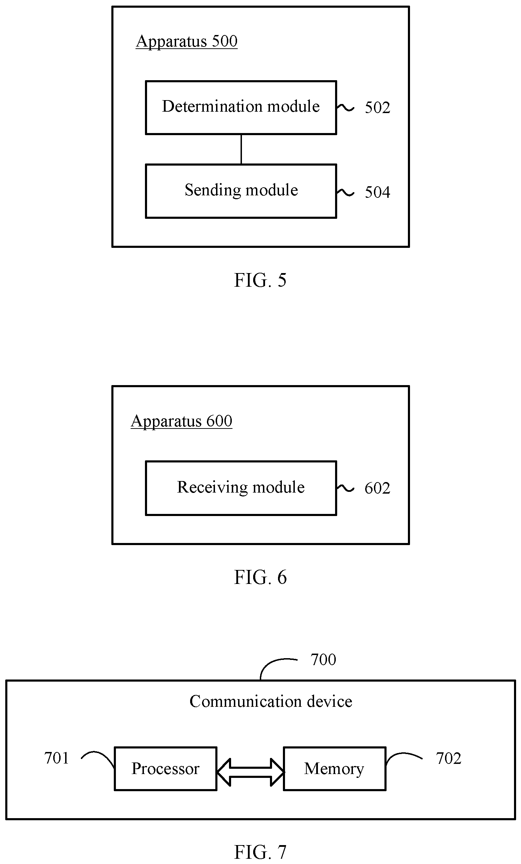

FIG. 5 is a schematic diagram of a structure of an apparatus for transmitting a pilot according to an embodiment of this application. The apparatus may correspond to a transmit end in other embodiments. As shown in FIG. 5, an apparatus 500 includes the following modules.

A determination module 502 may be configured to determine a transmitting parameter of the pilot, where the transmitting parameter includes at least one of the following: transmitting power and a guard interval, the transmitting parameter is determined based on first parameters, and the first parameters include a delay, Doppler, and channel quality.

A transmitting module 504 may be configured to transmit the pilot based on the transmitting parameter.

In this embodiment of this application, the apparatus 500 determines the transmitting parameter of the pilot. The transmitting parameter includes the transmitting power and/or the guard interval. The transmitting parameter is jointly determined based on the delay, the Doppler, and the channel quality. In this embodiment of this application, small-scale parameters (a delay and Doppler) and a large-scale parameter (channel quality) of a channel are comprehensively considered to determine the transmitting parameter of the pilot. This helps ensure detection performance of the pilot under various channel conditions and improve communication quality.

Optionally, in an embodiment, the first parameters include the channel quality. The determination module 502 is configured to perform, based on indication information, at least one of the following: increasing the transmitting power of the pilot, and increasing the guard interval of the pilot. The indication information is sent by a receive end when measured channel quality is greater than a first threshold; or the indication information is sent by the receive end when a measured second parameter is greater than or equal to a second threshold, where the second parameter is related to the channel quality.

Optionally, in an embodiment, the indication information includes a power amplification multiple of the pilot.

Optionally, in an embodiment, the first threshold is determined based on the following formula:

$$\zeta_l = \frac{(K-1)E\left(\sum_{l=0}^{L-1}|h_l|^2\right)}{cE(|h_l|^2)},$$

where

$\zeta_l$ represents the first threshold;
K represents a constant related to a detection threshold of the pilot;
E( ) represents a mathematical expectation;
L represents a quantity of delay paths;
l represents an index of a delay path;
$h_l$ represents a channel gain of a 1-th delay path; and
c represents a transmitting power multiple of the pilot.

Optionally, in an embodiment, the determination module 502 may be configured to determine the transmitting parameter of the pilot based on a first transmitting period. A length of the first transmitting period is greater than a length of a second transmitting period. The second transmitting period is a period for determining the transmitting parameter of the pilot.

Optionally, in an embodiment, the first parameters include the delay and the Doppler. The transmitting module 504 may be configured to transmit a first pilot. The apparatus further includes a receiving module for receiving a maximum delay and maximum Doppler. The maximum delay and the maximum Doppler are determined by the receive end based on the first pilot. The determination module 502 may be configured to determine a transmitting parameter of a second pilot based on the maximum delay and the maximum Doppler. The transmitting module 504 may be configured to transmit the second pilot based on the transmitting parameter of the second pilot. The receiving module may be configured to receive the delay and the Doppler, where the delay and the Doppler are determined by the receive end based on the second pilot; or the receiving module may be configured to receive the guard interval of the pilot, where the guard interval is determined by the receive end based on the second pilot.

Optionally, in an embodiment, the determination module 502 may be configured to determine the transmitting parameter of the pilot based on the second transmitting period. The length of the second transmitting period is greater than duration T.

Optionally, in an embodiment, the determination module 502 may be configured to: if the apparatus receives a third parameter in the second transmitting period, determine the transmitting parameter of the pilot based on the third parameter, where the third parameter is sent by the receive end when the second parameter is greater than or equal to the second threshold, and the second parameter is related to the channel quality.

Optionally, in an embodiment, the determination module 502 may be configured to increase the transmitting power of the pilot, or reduce the transmitting power of the pilot.

Optionally, in an embodiment, when the transmitting power of the pilot is increased, an increased value of the transmitting power of the pilot is equal to a reduced value of transmitting power of data, and the data and the pilot are mapped to a same delay-Doppler domain.

Optionally, in an embodiment, the transmitting module 504 may be configured to indicate the transmitting power of the data to the receive end, so that the receive end demodulates the data.

Optionally, in an embodiment, the determination module 502 may be configured to determine the transmitting power of the pilot based on a power scaling coefficient, where the power scaling coefficient is selected by the receive end from a plurality of default power scaling coefficients.

Optionally, in an embodiment, the determination module 502 may be configured to increase, when the power scaling coefficient is greater than 1, the transmitting power of the pilot based on one of the following: (1) increasing the guard interval of the pilot, where the transmitting power of the pilot is coupled to the guard interval of the pilot; and (2) reducing the transmitting power of the data, where the data and the pilot are mapped to the same delay-Doppler domain.

Optionally, in an embodiment, the determination module 502 may be configured to reduce the transmitting power of the pilot when the power scaling coefficient is less than 1.

Optionally, in an embodiment, the determination module 502 may be configured to increase the transmitting power of the data. A reduced value of the transmitting power of the pilot is equal to an increased value of the transmitting power of the data, and the data and the pilot are mapped to the same delay-Doppler domain.

Optionally, in an embodiment, the transmitting module 504 may be configured to indicate the transmitting parameter of the pilot to the receive end.

The apparatus 500 according to this embodiment of this application may correspond to the procedures of the method 200 in the embodiment of this application, and units/modules in the apparatus 500 and the foregoing other operations and/or functions are separately for implementing the corresponding procedures in the method 200, and can achieve a same or equivalent technical effect. For brevity, details are not described herein again.

The apparatuses for transmitting and receiving a pilot in the embodiments of this application may be apparatuses, apparatuses or electronic devices with an operating system, or components, integrated circuits, or chips in a terminal. The apparatus or electronic device may be a mobile terminal, or a non-mobile terminal. For example, the mobile terminal may include but is not limited to the foregoing listed types of a terminal 11. The non-mobile terminal may be a server, a network attached storage (Network Attached Storage, NAS), a personal computer (personal computer, PC), a television (television, TV), a teller machine, a self-service machine, or the like. This is not specifically limited in the embodiments of this application.

The apparatuses for transmitting and receiving a pilot provided in the embodiments of this application can implement the processes implemented in method embodiments from FIG. 2 to FIG. 3, and achieve a same technical effect. To avoid repetition, details are not described herein again.

FIG. 6 is a schematic diagram of a structure of an apparatus for receiving a pilot according to an embodiment of this application. The apparatus may correspond to a receive end in other embodiments. As shown in FIG. 6, an apparatus 600 includes the following modules.

A receiving module 602 may be configured to receive the pilot, where the pilot is sent by a transmit end based on a transmitting parameter, the transmitting parameter includes at least one of the following: transmitting power and a guard interval, the transmitting parameter is determined based on first parameters, and the first parameters include a delay, Doppler, and channel quality.

In this embodiment of this application, the apparatus 600 receives the pilot. The pilot is sent by the transmit end based on the transmitting parameter. The transmitting parameter includes the transmitting power and/or the guard interval. The transmitting parameter is jointly determined based on the delay, the Doppler, and the channel quality. In this embodiment of this application, small-scale parameters (a delay and Doppler) and a large-scale parameter (channel quality) of a channel are comprehensively considered to determine the transmitting parameter of the pilot. This helps ensure detection performance of the pilot under various channel conditions and improve communication quality.

Optionally, in an embodiment, the first parameters include the channel quality. The apparatus further includes a receiving module configured to transmit indication information when measured channel quality is greater than a first threshold; or transmitting indication information when a measured second parameter is greater than or equal to a second threshold, where the second parameter is related to the channel quality. The indication information is used to perform at least one of the following: increasing the transmitting power of the pilot, and increasing the guard interval of the pilot.

Optionally, in an embodiment, the indication information includes a power amplification multiple of the pilot.

Optionally, in an embodiment, the apparatus further includes a determination module configured to determine the first threshold based on the following formula:

$$\zeta_l = \frac{(K-1)E\left(\sum_{l=0}^{L-1} |h_l|^2\right)}{cE(|h_l|^2)},$$

where

$\zeta_l$ represents the first threshold;
K represents a constant related to a detection threshold of the pilot;
E( ) represents a mathematical expectation;
L represents a quantity of delay paths;
l represents an index of a delay path;
$h_l$ represents a channel gain of a 1-th delay path; and
c represents a transmitting power multiple of the pilot.

Optionally, in an embodiment, the transmit end is configured to determine the transmitting parameter of the pilot based on a first transmitting period. A length of the first transmitting period is greater than a length of a second transmitting period. The second transmitting period is a period in which the transmit end determines the transmitting parameter of the pilot based on the delay and the Doppler.

Optionally, in an embodiment, the first parameters include the delay and the Doppler. The receiving module 602 may be configured to receive a first pilot.

The apparatus further includes a transmitting module configured to transmit a maximum delay and maximum Doppler. The maximum delay and the maximum Doppler are determined by the apparatus based on the first pilot, and the maximum delay and the maximum Doppler are used by the transmit end to determine a transmitting parameter of a second pilot. The receiving module 602 may be configured to receive the second pilot, where the second pilot is sent by the transmit end based on the transmitting parameter of the second pilot. The transmitting module is configured to transmit the delay and the Doppler, where the delay and the Doppler are determined by the apparatus based on the second pilot; or the transmitting module is configured to transmit the guard interval of the pilot, where the guard interval is determined by the apparatus based on the second pilot.

Optionally, in an embodiment, the transmit end is configured to determine the transmitting parameter of the pilot based on the second transmitting period. The length of the second transmitting period is greater than duration T.

Optionally, in an embodiment, the apparatus further includes the transmitting module configured to transmit a third parameter when the second parameter is greater than or equal to the second threshold. The second parameter is related to the channel quality. If the transmit end receives the third parameter in the second transmitting period, the transmit end is further configured to determine the transmitting parameter of the pilot based on the third parameter.

Optionally, in an embodiment, the transmit end is configured to increase the transmitting power of the pilot, or reduce the transmitting power of the pilot.

Optionally, in an embodiment, when the transmit end increases the transmitting power of the pilot, an increased value of the transmitting power of the pilot is equal to a reduced value of transmitting power of data, and the data and the pilot are mapped to a same delay-Doppler domain.

Optionally, in an embodiment, the receiving module 602 may be configured to: receive the transmitting power of the data; and demodulate the data based on the transmitting power of the data.

Optionally, in an embodiment, the apparatus further includes a selection module for selecting a power scaling coefficient from a plurality of default power scaling coefficients, where the power scaling coefficient is used by the transmit end to determine the transmitting power of the pilot.

The apparatus 600 according to this embodiment of this application may correspond to the procedures of the method 300 in the embodiment of this application, and units/modules in the apparatus 600 and the foregoing operations and/or functions are separately for implementing the corresponding procedures of the method 300, and can achieve a same or equivalent technical effect. For brevity, details are not described herein again.

Optionally, as shown in FIG. 7, an embodiment of this application further provides a communication device 700, including a processor 701, a memory 702, and a program or an instruction that is stored in the memory 702 and executable on the processor 701. For example, in a case that the communication device 700 is a terminal, when the program or the instruction is executed by the processor 701, the processes of the foregoing embodiments of the methods for transmitting and receiving a pilot are implemented, and a same technical effect can be achieved. In a case that the communication device 700 is a network-side device, when the program or the instruction is executed by the processor 701, the processes in the foregoing embodiments of the methods for transmitting and receiving a pilot are implemented, and a same technical effect can be achieved. To avoid repetition, details are not described herein again.

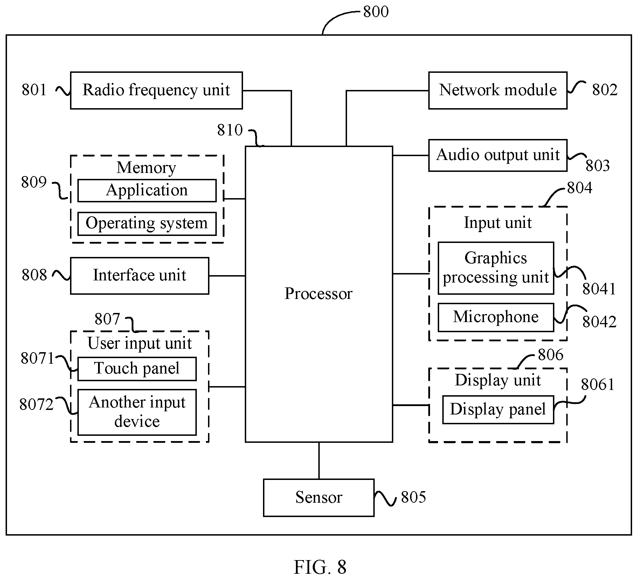

An embodiment of this application further provides a terminal, including: a processor and a communication interface. The processor is configured to determine a transmitting parameter of a pilot, where the transmitting parameter includes at least one of the following: transmitting power and a guard interval, the transmitting parameter is determined based on first parameters, and the first parameters include a delay, Doppler, and channel quality. The communication interface is configured to transmit the pilot based on the transmitting parameter; or the communication interface is configured to receive the pilot, where the pilot is sent by a transmit end based on the transmitting parameter, the transmitting parameter includes at least one of the following: the transmitting power and the guard interval, the transmitting parameter is determined based on the first parameters, and the first parameters include the delay, the Doppler, and the channel quality. This terminal embodiment corresponds to the foregoing terminal-side method embodiment. Each implementation process and implementation of the foregoing method embodiment may be applicable to this terminal embodiment, and can achieve a same technical effect. Specifically, FIG. 8 is a schematic diagram of a hardware structure of a terminal according to an embodiment of this application.

A terminal 800 includes but is not limited to at least a part of components such as a radio frequency unit 801, a network module 802, an audio output unit 803, an input unit 804, a sensor 805, a display unit 806, a user input unit 807, an interface unit 808, a memory 809, and a processor 810.

A person skilled in the art can understand that the terminal 800 may further include a power supply (such as a battery) that supplies power to the components. The power supply may be logically connected to the processor 810 by using a power supply management system, to implement functions such as charging and discharging management and power consumption management by using the power supply management system. The terminal structure shown in FIG. 8 constitutes no limitation on the terminal, and the terminal may include more or fewer components than those shown in the figure, or combine some components, or have different component arrangements. Details are not described herein.

It should be understood that in this embodiment of this application, the input unit 804 may include a graphics processing unit (Graphics Processing Unit, GPU) 8041 and a microphone 8042. The graphics processing unit 8041 processes image data of a static picture or a video obtained by an image capture apparatus (for example, a camera) in a video capture mode or an image capture mode. The display unit 806 may include a display panel 8061. The display panel 8061 may be configured in a form such as a liquid crystal display or an organic light-emitting diode. The user input unit 807 includes a touch panel 8071 and another input device 8072. The touch panel 8071 is also referred to as a touchscreen. The touch panel 8071 may include two parts: a touch detection apparatus and a touch controller. The another input device 8072 may include but is not limited to a physical keyboard, a functional button (such as a volume control button or a power on/off button), a trackball, a mouse, and a joystick. Details are not described herein.

In this embodiment of this application, the radio frequency unit 801 receives downlink data from a network side-device and then transmits the downlink data to the processor 810 for processing; and transmits uplink data to the network-side device. Usually, the radio frequency unit 801 includes but is not limited to an antenna, at least one amplifier, a transceiver, a coupler, a low noise amplifier, a duplexer, and the like.

The memory 809 may be configured to store a software program or an instruction and various data. The memory 809 may mainly include a program or instruction storage area and a data storage area. The program or instruction storage area may store an operating system, an application or an instruction required by at least one function (for example, a sound playing function or an image playing function), and the like. In addition, the memory 809 may include a high-speed random access memory, and may further include a non-transient memory. The non-transient memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-transient solid-state storage device.

The processor 810 may include one or more processing units. Optionally, an application processor and a modem processor may be integrated into the processor 810. The application processor mainly processes an operating system, a user interface, an application, an instruction, or the like. The modem processor mainly processes wireless communication, for example, a baseband processor. It may be understood that, alternatively, the modem processor may not be integrated into the processor 810.

The processor 810 may be configured to determine a transmitting parameter of a pilot, where the transmitting parameter includes at least one of the following: transmitting power and a guard interval, the transmitting parameter is determined based on first parameters, and the first parameters include a delay, Doppler, and channel quality. The radio frequency unit 801 may be configured to transmit the pilot based on the transmitting parameter; or
the radio frequency unit 801 may be configured to receive the pilot, where the pilot is sent by a transmit end based on the transmitting parameter, the transmitting parameter includes at least one of the following: the transmitting power and the guard interval, the transmitting parameter is determined based on the first parameters, and the first parameters include the delay, the Doppler, and the channel quality.

In this embodiment of this application, the transmitting parameter of the pilot includes the transmitting power and/or the guard interval. The transmitting parameter is jointly determined based on the delay, the Doppler, and the channel quality. In this embodiment of this application, small-scale parameters (a delay and Doppler) and a large-scale parameter (channel quality) of a channel are comprehensively considered to determine the transmitting parameter of the pilot. This helps ensure detection performance of the pilot under various channel conditions and improve communication quality.

The terminal 800 provided in this embodiment of this application may further implement the processes of the foregoing embodiments of the methods for transmitting and receiving a pilot, and a same technical effect can be achieved. To avoid repetition, details are not described herein again.

An embodiment of this application further provides a network-side device, including a processor and a communication interface. The processor is configured to determine a transmitting parameter of a pilot, where the transmitting parameter includes at least one of the following: transmitting power and a guard interval, the transmitting parameter is determined based on first parameters, and the first parameters include a delay, Doppler, and channel quality. The communication interface is configured to transmit the pilot based on the transmitting parameter; or the communication interface is configured to receive the pilot, where the pilot is sent by a transmit end based on the transmitting parameter, the transmitting parameter includes at least one of the following: the transmitting power and the guard interval, the transmitting parameter is determined based on the first parameters, and the first parameters include the delay, the Doppler, and the channel quality. The network-side device embodiment corresponds to the foregoing method embodiment of the network-side device. Each implementation process and implementation of the foregoing method embodiment may be applicable to the network-side device embodiment, and can achieve a same technical effect.

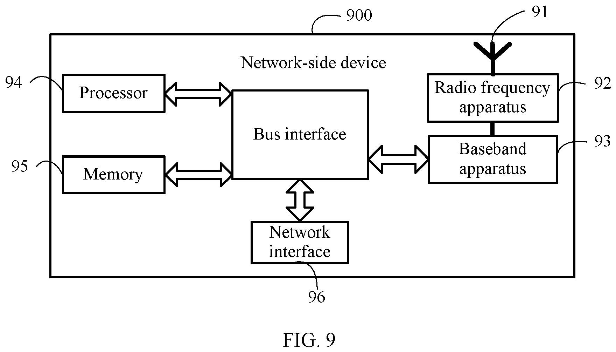

Specifically, an embodiment of this application further provides a network-side device. As shown in FIG. 9, a network-side device 900 includes an antenna 91, a radio frequency apparatus 92, and a baseband apparatus 93. The antenna 91 is connected to the radio frequency apparatus 92. In an uplink direction, the radio frequency apparatus 92 receives information through the antenna 91, and transmits the received information to the baseband apparatus 93 for processing. In a downlink direction, the baseband apparatus 93 processes information that needs to be sent, and transmits processed information to the radio frequency apparatus 92. The radio frequency apparatus 92 processes the received information, and transmits processed information through the antenna 91.

The frequency band processing apparatus may be located in the baseband apparatus 93. The method performed by the network-side device in the foregoing embodiment may be implemented in the baseband apparatus 93. The baseband apparatus 93 includes a processor 94 and a memory 95.

The baseband apparatus 93 may include, for example, at least one baseband board, where a plurality of chips are disposed on the baseband board. As shown in FIG. 9, one chip is, for example, the processor 94, which is connected to the memory 95, to invoke a program in the memory 95 to perform operations of the network-side device shown in the foregoing method embodiment.

The baseband apparatus 93 may further include a network interface 96 configured to exchange information with the radio frequency apparatus 92. For example, the interface is a common public radio interface (common public radio interface, CPRI for short).

Specifically, the network-side device in this embodiment of this application further includes an instruction or a program that is stored in the memory 95 and executable on the processor 94. The processor 94 invokes the instruction or the program in the memory 95 to perform the method performed by the modules shown in FIG. 5 and FIG. 6, and a same technical effect is achieved. To avoid repetition, details are not described herein again.

An embodiment of this application further provides a readable storage medium. The readable storage medium stores a program or an instruction. When the program or the instruction is executed by a processor, the processes of the foregoing embodiments of the methods for transmitting and receiving a pilot are implemented, and a same technical effect can be achieved. To avoid repetition, details are not described herein again.

The processor may be the processor in the terminal described in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor, and the processor is configured to run a program or an instruction to implement the processes of the foregoing embodiments of the methods for transmitting and receiving a pilot, and a same technical effect can be achieved. To avoid repetition, details are not described herein again.

It should be understood that the chip mentioned in this embodiment of this application may also be called a system-level chip, a system chip, a chip system, a system on chip, or the like.

An embodiment of this application further provides a computer program product. The computer program product is stored in a nonvolatile storage medium. The computer program product is executed by at least one processor to implement the processes of foregoing embodiments of the methods for transmitting and receiving a pilot, and a same technical effect can be achieved. To avoid repetition, details are not described herein again.

An embodiment of this application further provides a communication device configured to perform the processes of the foregoing embodiments of pilot transmitting and receiving, and a same technical effect can be achieved. To avoid repetition, details are not described herein again.

It should be noted that, in this specification, the term "include", "contain", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element limited by "includes a..." does not preclude the presence of additional identical elements in the process, method, article, or apparatus that includes the element. In addition, it should be noted that the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the methods in the foregoing embodiments may be implemented by using software and a necessary universal hardware platform, or certainly may be implemented by using hardware. However, in many cases, the former is a better implementation. Based on such an understanding, the technical solutions of this application essentially or the part contributing to the prior art may be implemented in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network-side device, or the like) to perform the methods described in the embodiments of this application.

The embodiments of this application are described above with reference to the accompanying drawings. However, this application is not limited to the foregoing specific implementations. The foregoing specific implementations are only illustrative and not restrictive. Under the enlightenment of this application, a person of ordinary skill in the art can make many forms without departing from the purpose of this application and the protection scope of the claims, all of which fall within the protection of this application.

**Claims**

1. A method for transmitting a pilot, comprising:

   determining, by a transmit end, a transmitting parameter of the pilot, wherein the transmitting parameter comprises at least one of the following: transmitting power and a guard interval, the transmitting parameter is determined based on first parameters, and the first parameters comprise a delay, Doppler, and channel quality; and transmitting, by the transmit end, the pilot based on the transmitting parameter.

2. The method according to claim 1, wherein the first parameters comprise the channel quality; and the determining, by a transmit end, a transmitting parameter of the pilot comprises:

   performing, by the transmit end based on indication information, at least one of the following: increasing the transmitting power of the pilot, and increasing the guard interval of the pilot, wherein
   the indication information is sent by a receive end when measured channel quality is greater than a first threshold; or
   the indication information is sent by a receive end when a measured second parameter is greater than or equal to a second threshold, and the second parameter is related to the channel quality.

3. The method according to claim 2, wherein the indication information comprises a power amplification multiple of the pilot.

4. The method according to claim 2, wherein the first threshold is determined based on the following formula:

$$\zeta_l = \frac{(K-1)E\left(\sum_{l=0}^{L-1}|h_l|^2\right)}{cE(|h_l|^2)},$$

wherein

$\zeta_l$ represents the first threshold;
K represents a constant related to a detection threshold of the pilot;
E( ) represents a mathematical expectation;
L represents a quantity of delay paths;
l represents an index of a delay path;
$h_l$ represents a channel gain of a l-th delay path; and
c represents a transmitting power multiple of the pilot.

**5.** The method according to claim 2, wherein the determining, by a transmit end, a transmitting parameter of the pilot comprises:
determining, by the transmit end, the transmitting parameter of the pilot based on a first transmitting period, wherein a length of the first transmitting period is greater than a length of a second transmitting period, and the second transmitting period is a period for determining the transmitting parameter of the pilot.

**6.** The method according to any one of claims 1 to 5, wherein the first parameters comprise the delay and the Doppler; and before the determining, by a transmit end, a transmitting parameter of the pilot, the method further comprises:

transmitting, by the transmit end, a first pilot;
receiving, by the transmit end, a maximum delay and maximum Doppler, wherein the maximum delay and the maximum Doppler are determined by the receive end based on the first pilot;
determining, by the transmit end, a transmitting parameter of a second pilot based on the maximum delay and the maximum Doppler;
transmitting, by the transmit end, the second pilot based on the transmitting parameter of the second pilot; and
receiving, by the transmit end, the delay and the Doppler, wherein the delay and the Doppler are determined by the receive end based on the second pilot; or receiving, by the transmit end, the guard interval of the pilot, wherein the guard interval is determined by the receive end based on the second pilot.

**7.** The method according to claim 6, wherein the determining, by a transmit end, a transmitting parameter of the pilot comprises:
determining, by the transmit end, the transmitting parameter of the pilot based on the second transmitting period, wherein the length of the second transmitting period is greater than duration T.

**8.** The method according to claim 7, wherein the method further comprises:

if the transmit end receives a third parameter in the second transmitting period, determining, by the transmit end, the transmitting parameter of the pilot based on the third parameter, wherein the third parameter is sent by the receive end when the second parameter is greater than or equal to the second threshold, and the second parameter is related to the channel quality.

**9.** The method according to any one of claims 1 to 8, wherein the determining, by a transmit end, a transmitting parameter of the pilot comprises:

increasing, by the transmit end, the transmitting power of the pilot; or
reducing, by the transmit end, the transmitting power of the pilot.

**10.** The method according to claim 9, wherein when the transmit end increases the transmitting power of the pilot, an increased value of the transmitting power of the pilot is equal to a reduced value of transmitting power of data, and the data and the pilot are mapped to a same delay-Doppler domain.

**11.** The method according to claim 10, wherein the method further comprises:
indicating, by the transmit end, the transmitting power of the data to the receive end, so that the receive end demodulates the data.

**12.** The method according to claim 9, wherein the determining, by a transmit end, a transmitting parameter of the pilot comprises:

determining, by the transmit end, the transmitting power of the pilot based on a power scaling coefficient, wherein
the power scaling coefficient is selected by the receive end from a plurality of default power scaling coefficients.

**13.** The method according to claim 12, wherein the determining, by the transmit end, the transmitting power of the pilot based on a power scaling coefficient comprises:
when the power scaling coefficient is greater than 1, increasing, by the transmit end, the transmitting power of the pilot based on one of the following:

increasing the guard interval of the pilot, wherein the transmitting power of the pilot is coupled to the guard interval of the pilot; and
reducing transmitting power of data, wherein the data and the pilot are mapped to a same delay-Doppler domain.

**14.** The method according to claim 12, wherein the determining, by the transmit end, the transmitting power of the pilot based on a power scaling coefficient comprises:
when the power scaling coefficient is less than 1, reducing, by the transmit end, the transmitting power of the pilot.

**15.** The method according to claim 14, wherein the method further comprises:
increasing, by the transmit end, transmitting power of data, wherein a reduced value of the transmitting power of the pilot is equal to an increased value of the transmitting power of the data, and the data and the pilot are mapped to a same delay-Doppler domain.

16. The method according to claim 1, wherein after the determining, by a transmit end, a transmitting parameter of the pilot, the method further comprises: indicating, by the transmit end, the transmitting parameter of the pilot to a receive end.

17. A method for receiving a pilot, comprising:
    receiving, by a receive end, the pilot, wherein the pilot is sent by a transmit end based on a transmitting parameter, the transmitting parameter comprises at least one of the following: transmitting power and a guard interval, the transmitting parameter is determined based on first parameters, and the first parameters comprise a delay, Doppler, and channel quality.

18. The method according to claim 17, wherein the first parameters comprise the channel quality; and before the receiving, by a receive end, the pilot, the method further comprises:

    transmitting, by the receive end, indication information when measured channel quality is greater than a first threshold; or
    transmitting, by the receive end, indication information when a measured second parameter is greater than or equal to a second threshold, wherein the second parameter is related to the channel quality; and
    the indication information is used by the transmit end to perform at least one of the following: increasing the transmitting power of the pilot, and increasing the guard interval of the pilot.

19. The method according to claim 18, wherein the indication information comprises a power amplification multiple of the pilot.

20. The method according to claim 18, wherein the method further comprises: determining, by the receive end, the first threshold based on the following formula:

$$\zeta_l = \frac{(K-1)E\left(\sum_{l=0}^{L-1}|h_l|^2\right)}{cE(|h_l|^2)},$$

wherein

    $\zeta_l$ represents the first threshold;
    K represents a constant related to a detection threshold of the pilot;
    E( ) represents a mathematical expectation;

L represents a quantity of delay paths;
l represents an index of a delay path;
$h_l$ represents a channel gain of a l-th delay path; and
c represents a transmitting power multiple of the pilot.

21. The method according to claim 18, wherein the transmit end is configured to determine the transmitting parameter of the pilot based on a first transmitting period, a length of the first transmitting period is greater than a length of a second transmitting period, and the second transmitting period is a period in which the transmit end determines the transmitting parameter of the pilot based on the delay and the Doppler.

22. The method according to any one of claims 17 to 21, wherein the first parameters comprise the delay and the Doppler; and before the receiving, by a receive end, the pilot, the method further comprises:

    receiving, by the receive end, a first pilot;
    transmitting, by the receive end, a maximum delay and maximum Doppler, wherein the maximum delay and the maximum Doppler are determined by the receive end based on the first pilot, and the maximum delay and the maximum Doppler are used by the transmit end to determine a transmitting parameter of a second pilot;
    receiving, by the receive end, the second pilot, wherein the second pilot is sent by the transmit end based on the transmitting parameter of the second pilot; and
    transmitting, by the receive end, the delay and the Doppler, wherein the delay and the Doppler are determined by the receive end based on the second pilot; or transmitting, by the receive end, the guard interval of the pilot, wherein the guard interval is determined by the receive end based on the second pilot.

23. The method according to claim 22, wherein the transmit end is configured to determine the transmitting parameter of the pilot based on the second transmitting period, wherein the length of the second transmitting period is greater than duration T.

24. The method according to claim 23, wherein the method further comprises:

    transmitting, by the receive end, a third parameter when the second parameter is greater than or equal to the second threshold, wherein the second parameter is related to the channel quality; and
    if the transmit end receives the third parameter in the second transmitting period, the transmit end is further configured to determine the transmitting parameter of the pilot based on the third parameter.

25. The method according to any one of claims 17 to 24, wherein the transmit end is configured to increase the transmitting power of the pilot, or reduce the transmitting power of the pilot.

26. The method according to claim 25, wherein when the transmit end increases the transmitting power of the pilot, an increased value of the transmitting power of the pilot is equal to a reduced value of transmitting power of data, and the data and the pilot are mapped to a same delay-Doppler domain.

27. The method according to claim 26, wherein the method further comprises:

   receiving, by the receive end, the transmitting power of the data; and
   demodulating, by the receive end, the data based on the transmitting power of the pilot.

28. The method according to claim 25, wherein the method further comprises: selecting, by the receive end, a power scaling coefficient from a plurality of default power scaling coefficient, wherein
the power scaling coefficient is used by the transmit end to determine the transmitting power of the pilot.

29. An apparatus for transmitting a pilot, comprising:

   a determination module, configured to determine a transmitting parameter of the pilot, wherein the transmitting parameter comprises at least one of the following: transmitting power and a guard interval, the transmitting parameter is determined based on first parameters, and the first parameters comprise a delay, Doppler, and channel quality; and
   a transmitting module, configured to transmit the pilot based on the transmitting parameter.

30. An apparatus for receiving a pilot, comprising:
a receiving module, configured to receive the pilot, wherein the pilot is sent by a transmit end based on a transmitting parameter, the transmitting parameter comprises at least one of the following: transmitting power and a guard interval, the transmitting parameter is determined based on first parameters, and the first parameters comprise a delay, Doppler, and channel quality.

31. A terminal, comprising a processor, a memory, and a program or an instruction that is stored in the memory and executable on the processor, wherein when the program or the instruction is executed by the processor, the method for transmitting a pilot according to any one of claims 1 to 16 is implemented, or the method for receiving a pilot according to any one of claims 17 to 28 is implemented.

32. A network-side device, comprising a processor, a memory, and a program or an instruction that is stored in the memory and executable on the processor, wherein when the program or the instruction is executed by the processor, the method for transmitting a pilot according to any one of claims 1 to 16 is implemented, or the method for receiving a pilot according to any one of claims 17 to 28 is implemented.

33. A readable storage medium, wherein the readable storage medium stores a program or an instruction, and when the program or the instruction is executed by the processor, the method for transmitting a pilot according to any one of claims 1 to 16 is implemented, or the method for receiving a pilot according to any one of claims 17 to 28 is implemented.

FIG. 1

FIG. 2

300

```
┌────────────────────────────────────────────────────┐
│ A transmit end determines a transmitting parameter of a pilot, where │
│ the transmitting parameter includes at least one of transmitting │
│ power or a guard interval, the transmitting parameter is determined │  ~ S302
│ based on first parameters, and the first parameters include a delay, │
│ Doppler, and channel quality │
└────────────────────────────────────────────────────┘
```

```
┌────────────────────────────────────────────────────┐
│ The transmit end transmits the pilot based on the transmitting │  ~ S304
│ parameter │
└────────────────────────────────────────────────────┘
```

FIG. 3

400

```
┌────────────────────────────────────────────────────┐
│ A receive end receives a pilot, where the pilot is transmitted by a │
│ transmit end based on a transmitting parameter, the transmitting │
│ parameter includes at least one of transmitting power or a guard │  ~ S402
│ interval, the transmitting parameter is determined based on first │
│ parameters, and the first parameters include a delay, Doppler, and │
│ channel quality │
└────────────────────────────────────────────────────┘
```

FIG. 4

```
┌─────────────────────────────────────┐
│ Apparatus 500                        │
│   ┌──────────────────────────┐       │
│   │  Determination module    │ ∿ 502 │
│   └──────────────────────────┘       │
│                │                     │
│   ┌──────────────────────────┐       │
│   │    Sending module        │ ∿ 504 │
│   └──────────────────────────┘       │
└─────────────────────────────────────┘
```

FIG. 5

```
┌─────────────────────────────────────┐
│ Apparatus 600                        │
│   ┌──────────────────────────┐       │
│   │   Receiving module       │ ∿ 602 │
│   └──────────────────────────┘       │
└─────────────────────────────────────┘
```

FIG. 6

700

```
┌──────────────────────────────────────────┐
│         Communication device             │
│  701 ┌───────────┐      ┌───────────┐ 702 │
│      │ Processor │ ◄──► │  Memory   │     │
│      └───────────┘      └───────────┘     │
└──────────────────────────────────────────┘
```

FIG. 7

FIG. 8

FIG. 9

## INTERNATIONAL SEARCH REPORT

| International application No. |
|---|
| **PCT/CN2022/116477** |

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI; 3GPP: 导频, 发送, 功率, 保护间隔, 时延, 多普勒, 信道质量, 信噪比, 信干噪比, 阈值, pilot, transmit, power, GP, guard period, delay, CQI, SNR, SINR, RSRQ, RSRP, channel, quality, threshold

**C. DOCUMENTS CONSIDERED TO BE RELEVANT**

| Category* | Citation of document, with indication, where appropriate, of the relevant passages | Relevant to claim No. |
|---|---|---|
| X | CN 102077657 B (HUAWEI TECHNOLOGIES CO., LTD.) 24 April 2013 (2013-04-24) description, paragraphs [0027]-[0143] | 1-33 |
| A | CN 112003808 A (CHENGDU HUAWEI TECHNOLOGIES CO., LTD.) 27 November 2020 (2020-11-27) entire document | 1-33 |
| A | CN 111786763 A (GUANGDONG OPPO MOBILE COMMUNICATIONS CO., LTD.) 16 October 2020 (2020-10-16) entire document | 1-33 |
| A | CN 108702271 A (HUAWEI TECHNOLOGIES DUESSELDORF GMBH) 23 October 2018 (2018-10-23) entire document | 1-33 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 November 2022** | **28 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/116477**

| Patent document cited in search report | | | Publication date (day/month/year) | Patent family member(s) | | | Publication date (day/month/year) |
|---|---|---|---|---|---|---|---|
| CN | 102077657 | B | 24 April 2013 | CN | 102077657 | A | 25 May 2011 |
| | | | | WO | 2010133028 | A1 | 25 November 2010 |
| CN | 112003808 | A | 27 November 2020 | | None | | |
| CN | 111786763 | A | 16 October 2020 | | None | | |
| CN | 108702271 | A | 23 October 2018 | WO | 2017144112 | A1 | 31 August 2017 |
| | | | | US | 2019013914 | A1 | 10 January 2019 |
| | | | | EP | 3411981 | A1 | 12 December 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111039470